# EUROPEAN PATENT APPLICATION

(11) **EP 2 903 243 A2**
(43) Date of publication of application: **05.08.2015**
(21) Application number: 15153856.8
(22) Date of filing: 04.02.2015
(51) Int. Cl.: H04M 1/05, H04M 1/60, H04R 1/10, H04B 1/3827

(54) **COMMUNICATION DEVICE WITH INTEGRATED HEADSET**

(30) Priority: 04.02.2014 US 201414172291
(71) Applicant: BlackBerry Limited, Waterloo, ON N2K 0A7 (CA)
(72) Inventor: Wennemer, Dietmar Frank, Waterloo, Ontario N2K 0A7 (CA); Pegg, Albert, Murray, Waterloo, Ontario N2K 0A7 (CA); Tamblyn, Joseph Claude, Milton, John, Waterloo, Ontario N2K 0A7 (CA)
(74) Representative: Moore, Barry

(57) **Abstract**

A communication device (100) that has an integrated wireless headset (148). When not in use, the wireless headset (148) can be stored in a recess (150) of the housing of the communication device (100). This allows the user of the communication device (100) to easily find the wireless headset (148) when needed. The wireless headset (148) has a headphones connector (156) for connecting headphones (158) to the headset. The headphones connector (156) allows the user to place the wireless headset (148), to which the headphones (158) are connected, in his or her pocket or purse and enjoy music through the headphones (158), which typically provide better sound quality than the wireless headset (148).

## Description

### FIELD

The present disclosure relates generally to communications devices. More particularly, the present disclosure relates to communication devices equipped with wireless headsets.

### BACKGROUND

Communication devices operable with a wireless headset are known. For example, smartphones that can be used with a Bluetooth^{™} headset are common.

In the case of some users, the wireless headset is kept separate from the smartphone and is used infrequently. As such, the wireless headset can become difficult to find when needed and, when found, will often require charging before use.

In other cases, the users will want to use a wireless headset for telephone conversation and headphones, which typically have better audio characteristics, for listening to music from their smartphone. In such case, the users need to carry with them the smartphone, the headset, and the headphones.

Therefore, improvements are needed in communication devices that have a wireless headset.

### SUMMARY

Accordingly the present teaching provides a communication device and headset as defined in the independent claims. Advantageous features are described in the dependent claims.

### BRIEF DESCRIPTION OF THE DRAWINGS

Embodiments of the present disclosure will now be described, by way of example only, with reference to the attached Figures.
Figure 1 shows a block diagram of an exemplary embodiment of a mobile communication device in accordance with the present disclosure.
Figure 2 shows a front view of an embodiment of a mobile communication device according to the present disclosure.
Figure 3 shows a back view of the mobile communication device of Figure 2.
Figure 4 shows the mobile communication device of Figure 3 with the headset removed.
Figure 5 shows a back view of an embodiment of a headset in accordance with the present disclosure.
Figure 6 shows a front view of the headset of Figure 5.
Figure 7 shows a side view of the headset of Figure 5.
Figure 8 shows another side view of the headset of Figure 5.
Figure 9 shows the headset of Figure 5 connected to headphones.
Figure 10 shows a person wearing a headset.
Figure 11 shows a person wearing headphones connected to a headset.
Figure 12 shows a side view of another embodiment of the mobile communication device in accordance with the present disclosure.
Figure 13 shows the side view of Figure 13 with the headset removed.
Figure 14 shows a front view of another embodiment of a mobile communication device according to the present disclosure.
Figure 15A shows a front view of yet another embodiment of a mobile communication device according to the present disclosure.
Figure 15B shows a top view of the mobile communication device of Figure 15A.
Figure 16 shows a block diagram representation of the mobile communication device of Figure 15A.
Figure 17 shows a block diagram representation of an embodiment of a headset in accordance with the present disclosure.
Figure 18 shows a block diagram representation of a headset being charged by the battery of a mobile communication device in accordance with the present disclosure.
Figure 19 shows a block diagram representation of an embodiment of an electrical charger connected to a battery of a mobile communication device and to the battery of the headset.
Figure 20 shows a block diagram representation of another embodiment of an electrical charger connected to a battery of a mobile communication device and to the battery of the headset.
Figure 21 shows block diagram representation of a mobile communication device using a headphones connector of a headset in accordance with an embodiment of the present disclosure.

### DETAILED DESCRIPTION

Generally, the present disclosure provides a communication device that has an integrated wireless headset. The wireless headset has a connector for connecting to headphones. Advantageously, when not in use, the wireless headset can be removably secured to the housing of the communication device. This allows the user of the communication device to easily find the wireless headset. Further, when the wireless headset is removably secured to the housing, the battery of the wireless headset can be charged from the battery of the communication device or from an external charger when the communication device is electrically connected to the external charger. As such, the wireless headset is likely to be charged when needed. Additionally, as the wireless headset is likely to be secured to the communication device when not in use, and therefore be charged, the wireless headset can afford to have a rechargeable battery smaller than that of other wireless headsets that are not likely to be charged so frequently.

Additionally, the wireless headset can have a connector for connecting to headphones. This allows the user to place the wireless headset, to which the headphones are connected, in his or her, for example, pocket or purse and enjoy music through the headphones, which typically provide better sound quality than the wireless headset. By having the headphones connected to the wireless headset and the wireless headset placed in his or her pocket or purse, the user is free to manipulate the communication device without having the headphone wires dangling and being prone to catching to surrounding objects, such as when headphones are connected directly to the communication device.

The present disclosure provides a communication device that comprises a housing and a headset removably securable to the housing. The housing has a housing transceiver and the headset has a headset transceiver. The housing transceiver and the headset transceiver are configured to communicate with each other using personal area network wireless signals. The headset has control circuitry, an audio output device, an audio codec, and a headphones connector for connecting headphones to the headset. The audio codec is to convert a personal area network wireless signal received from the housing into an analog audio signal. The control circuitry is operable, in a first configuration, to provide the analog audio signal to the audio output device and, in a second configuration, to provide the analog audio signal to the headphones connector for communicating the analog audio signal to the headphones when the headphones are connected to the headphones connector.

The present disclosure also provides a headset for a communication device. The headset comprises: a headset transceiver configured to communicate with another transceiver using personal area network wireless signals; an audio output device; an audio codec; and a headphones connector for connecting headphones to the headset, the audio codec to convert a personal area network wireless signal received from the other transceiver into an analog audio signal, the headset being operable, in a first configuration, to provide the analog audio signal to the audio output device and, in a second configuration, to provide the analog audio signal to the headphones connector for communicating the analog audio signal to the headphones when the headphones are connected to the headphones connector.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

In general, two components are "electrically connected" when an electrical change caused by or affecting one (such as a change in voltage or current) can result in an electrical change in the other, or when an electrical signal sent by one can be received by the other. The two components need not be directly electrically connected (that is, there may be other elements interposed between them), and they may be, but need not be, proximate to one another. "Electrically connected" also includes the concept that components may be physically connected but the electrical circuit connections between them may be broken or completed by, for example, switching circuitry.

The embodiments described herein generally relate to communication devices such as, for example, mobile wireless communication devices, which can also be referred to as mobile communication devices or as mobile devices. Examples of mobile communication devices include cellular phones, cellular smartphones, smartphones with push-to-talk capabilities, handheld wireless communication devices, tablet computers, and the like.

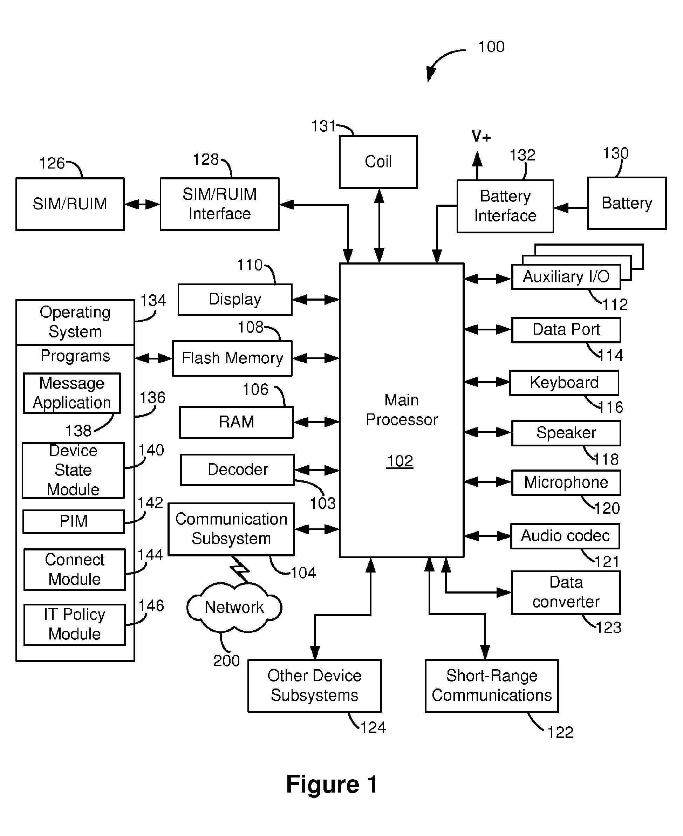

Within the context of the present disclosure, a communication device or a mobile communication device is a two-way communication device with data communication capabilities including the capability to communicate with other mobile devices or computer systems through a network of transceiver stations. The mobile communication device also has the capability to allow voice communication. Depending on the functionality provided by the mobile device, it may be referred to as a data messaging device, a two-way pager, a cellular telephone with data messaging capabilities, a wireless Internet appliance, or a data communication device. To aid the reader in understanding the structure of the MCD, reference will now be made to Figure 1.

Shown in Figure 1, is a block diagram of an exemplary embodiment of a mobile communication device 100. The mobile communication device 100 includes a number of components such as a main processor 102 that controls the overall operation of the mobile communication device 100. Communication functions, including data and voice communications, are performed through a communication subsystem 104. Data received by the mobile communication device 100 can be decompressed and decrypted by decoder 103, operating according to any suitable decompression techniques (e.g. YK decompression, and other known techniques) and encryption techniques (e.g. using an encryption techniques such as Data Encryption Standard (DES), Triple DES, or Advanced Encryption Standard (AES)). The communication subsystem 104 receives messages from, and sends messages to, a wireless network 200. In this exemplary embodiment of the mobile communication device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with the mobile communication device 100 is a GSM/GPRS wireless network in one exemplary implementation, other wireless networks may also be associated with the mobile communication device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range communications subsystem 122 and other device subsystems 124. The display 110 can include a touch-sensitive display.

Some of the subsystems of the mobile communication device 100 perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list.

The mobile communication device 100 can send and receive communication signals over the wireless network 200 after required network registration or activation procedures have been completed. Network access is associated with a subscriber or user of the mobile communication device 100. To identify a subscriber, the mobile communication device 100 requires a SIM/RUIM card 126 (i.e. Subscriber Identity Module or a Removable User Identity Module) to be inserted into a SIM/RUIM interface 128 in order to communicate with a network. The SIM/RUIM card 126 is one type of a conventional "smart card" that can be used to identify a subscriber of the mobile communication device 100 and to personalize the mobile communication device 100, among other things. Without the SIM/RUIM card 126, the mobile communication device 100 is not fully operational for communication with the wireless network 200. By inserting the SIM/RUIM card 126 into the SIM/RUIM interface 128, a subscriber can access all subscribed services. Services may include: web browsing and messaging such as e-mail, voice mail, Short Message Service (SMS), and Multimedia Message Service (MMS). More advanced services may include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM /RUIM card 126 can include some user parameters such as an International Mobile Subscriber Identity (IMSI). An advantage of using the SIM/RUIM card 126 is that a subscriber is not necessarily bound by any single physical mobile communication device. The SIM/RUIM card 126 may store additional subscriber information for a mobile communication device as well, including datebook (or calendar) data and recent call data. Alternatively, user identification data and other data items can also be programmed into the flash memory 108.

The mobile communication device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile communication device 100. Although current technology makes use of a battery, future technologies such as micro fuel cells or capacitor-based power supplies may provide the power to the mobile communication device 100. As will be understood by the skilled worker, batteries, micro fuel cells, capacitor-based based power supplies, or any other device that can produce an electrical output usable by the mobile communication device 100, can all be referred to as electrical energy sources.

The mobile communication device 100 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, will normally be installed on the mobile communication device 100 during its manufacture. Other software applications include a message application 138 that can be any suitable software program that allows a user of the mobile communication device 100 to send and receive electronic messages. Various alternatives exist for the message application 138 as is well known to those skilled in the art. Messages that have been sent or received by the user are typically stored in the flash memory 108 of the mobile communication device 100 or some other suitable storage element in the mobile communication device 100. In certain embodiments, some of the sent and received messages may be stored remotely from the device 100 such as in a data store of an associated host system that the mobile communication device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile communication device 100 is turned off or loses power.

The PIM 142 includes functionality for organizing and managing data items of interest to the user, such as, but not limited to, e-mail, contacts, calendar events, appointments, and task items. The PIM 142 can also organize and manage any voice mails recorded on the mobile communication device 100. A PIM application has the ability to send and receive data items via the wireless network 200. PIM 142 data items may be seamlessly integrated, synchronized, and updated via the wireless network 200 with the mobile communication device subscriber's corresponding data items stored in, or accessible by, a host computer system. This functionality creates a mirrored host computer on the mobile communication device 100 with respect to such items. This can be advantageous when the host computer system is the mobile communication device subscriber's office computer system.

The mobile communication device 100 also includes a connect module 144, and an information technology (IT) policy module 146. The connect module 144 implements the communication protocols that are required for the mobile communication device 100 to communicate with the wireless infrastructure and any host system, such as an enterprise system, that the mobile communication device 100 is authorized to interface with.

The connect module 144 includes a set of application programming interfaces (APIs) that can be integrated with the mobile communication device 100 to allow the mobile communication device 100 to use any number of services associated with the enterprise system. The connect module 144 allows the mobile communication device 100 to establish an end-to-end secure, authenticated communication pipe with the host system. A subset of applications for which access is provided by the connect module 144 can be used to pass information technology (IT) policy commands from the host system to the mobile communication device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the mobile communication device 100. These software applications can be third party applications, which are added after the manufacture of the mobile communication device 100. Examples of third party applications include games, calculators, utilities, etc.

The additional applications can be loaded onto the mobile communication device 100 through at least one of the wireless network 200, the auxiliary input/output (I/O) subsystem 112, the data port 114, the short-range communications subsystem 122, or any other suitable device subsystem 124. This flexibility in application installation increases the functionality of the mobile communication device 100 and may provide enhanced on-device functions, communication-related functions, or both. For example, secure communication applications may enable electronic commerce functions and other such financial transactions to be performed using the mobile communication device 100.

The data port 114 enables a subscriber to set preferences through an external device or software application and extends the capabilities of the mobile communication device 100 by providing for information or software downloads to the mobile communication device 100 other than through a wireless communication network. The alternate download path may, for example, be used to load an encryption key onto the mobile communication device 100 through a direct and thus reliable and trusted connection to provide secure device communication.

The data port 114 can be any suitable port that enables data communication between the mobile communication device 100 and another computing device. The data port 114 can be a serial or a parallel port. In some instances, the data port 114 can be a USB port that includes data lines for data transfer and a supply line that can provide a charging current to charge the battery 130 of the mobile communication device 100.

The short-range communications subsystem 122 provides for communication between the mobile communication device 100 and different systems or devices, without the use of the wireless network 200. For example, the subsystem 122 can include a transceiver to transmit and receive personal area network (PAN) wireless signals such as, for example, a Bluetooth^{™} signal, an IrDA signal, a wireless USB signal, a body area network signal, and signals based on the 802.11 family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 may be an alphanumeric keyboard, a telephone-type keypad, or both. Alternatively, instead of having a keyboard 116, keyboard functionality can be provided to the user through a touch-sensitive display that may be included in the display 110. Other types of keyboards may also be used. A composed item may be transmitted over the wireless network 200 through the communication subsystem 104.

For voice communications, the overall operation of the mobile communication device 100 is substantially similar, except that the received signals are output to the speaker 118, and signals for transmission are generated by the microphone 120. Alternative voice or audio I/O subsystems, such as a voice message recording subsystem, can also be implemented on the mobile communication device 100. Although voice or audio signal output is accomplished primarily through the speaker 118, the display 110 can also be used to provide additional information such as the identity of a calling party, duration of a voice call, or other voice call related information.

The mobile communication device 100 can also include a coil 131 that can be operationally connected to the battery 130 to charge the battery. That is, the coil 131 can be used to charge the battery 130 by electromagnetic induction upon the coil 131 being subjected to an electromagnetic induction charge signal, which is a time-varying magnetic field.

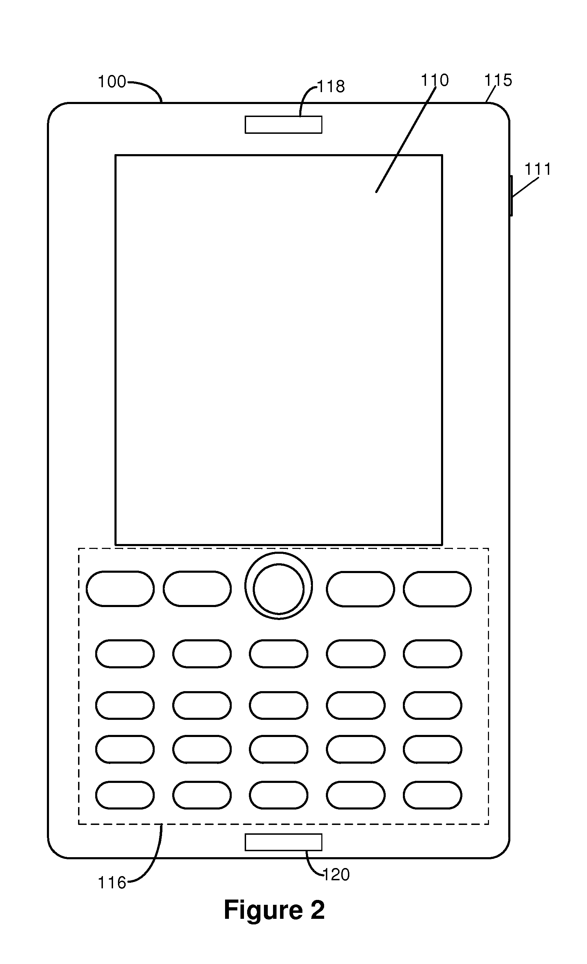

Figure 2 shows a front view of an embodiment of a mobile communication device according to the present disclosure. The mobile communication device 100 has a housing 115, keyboard 116, a microphone 120, a display 110, speaker 118, and an on/off switch 111.

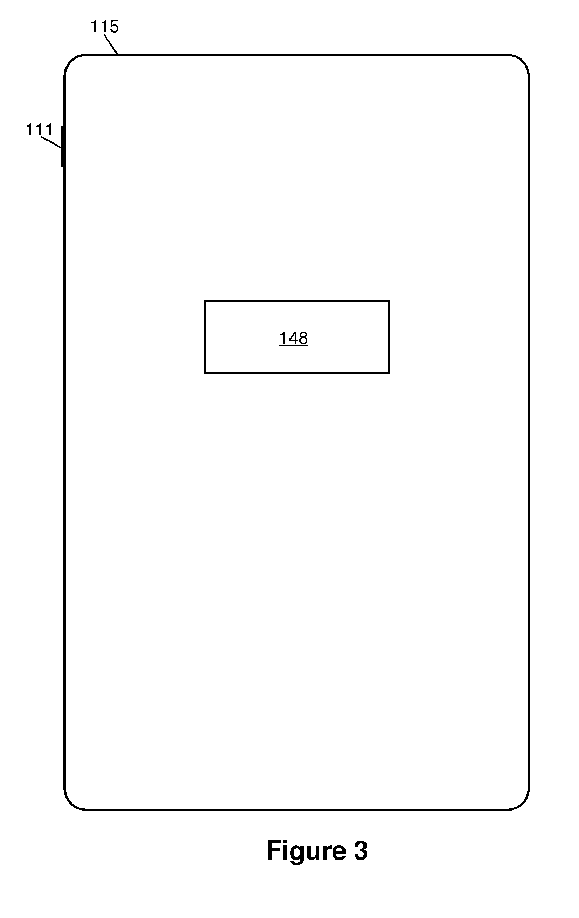

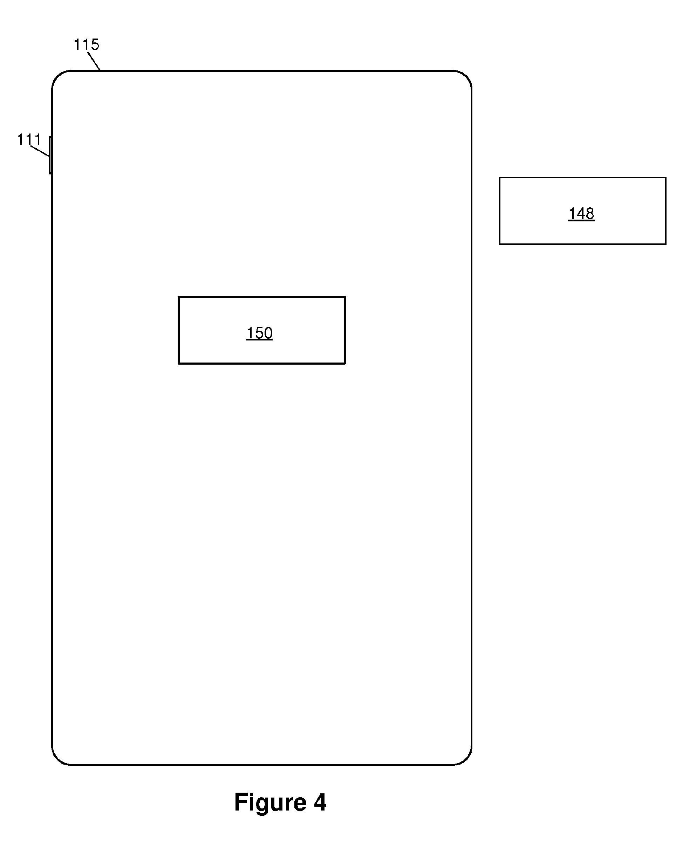

Figure 3 shows a back view of the mobile communication device 100 of Figure 2. The mobile communication device 100 has a headset 148 integrated with the housing 115. The headset 148 is removable from the housing 115 to allow the user to place the headset adjacent the user's ear, i.e., to wear the headset. The headset 148 communicates with the short range communication subsystem (see 122, Figure 1) using any suitable wireless signals, including packetized data signals such as Bluetooth^{™} signals. Figure 4 shows another back view of the mobile communication device 100 of Figure 2 but with the headset 148 removed. As shown in Figure 4, the housing defines a recess 150 in which the headset 148 can be inserted. In some embodiments, the headset can have defined thereon an aesthetic element such as a logo. The headset 148 can be retained in the recess 150 through any suitable mechanism such as, for example a push to release mechanism. The headset 148 can also be referred to as a wireless headest.

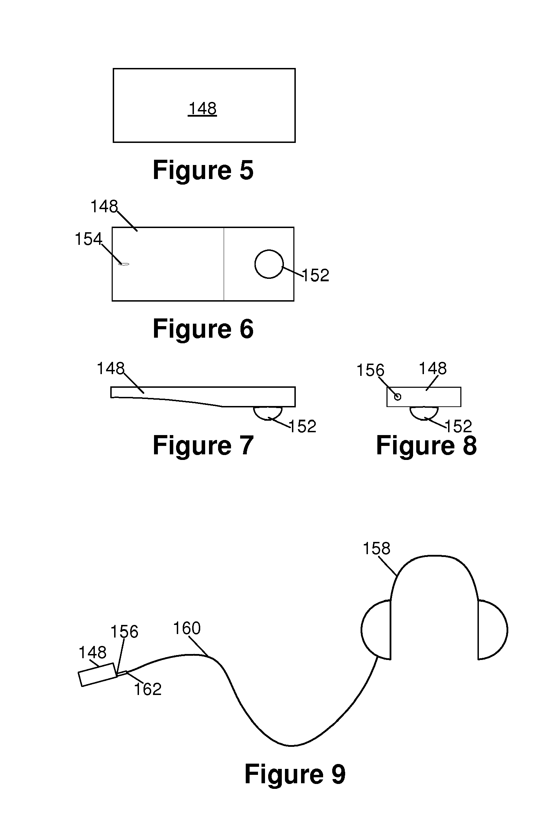

Figure 5 shows a back view of the headset 148. Figure 6 shows a front view of the headset 148, which includes an ear-insert 152 and a headset microphone 154. The ear-insert 152 is operationally connected to a headset speaker (not shown) or to any other suitable sound-producing device (audio output device) provided in the headset 148. To use the headset 148, the user inserts the ear-insert 152 into his or her ear. Figure 7 shows a side view of the headset 148, and Figure 8 shows another side view of the headset 148. As shown in Figure 8, the headset 148 has a connector (headphones connector) 156 to which the user can connect headphones. Figure 9 shows the headset 148 connected to headphones 158 with the headphones cable 160 and a connector 162.

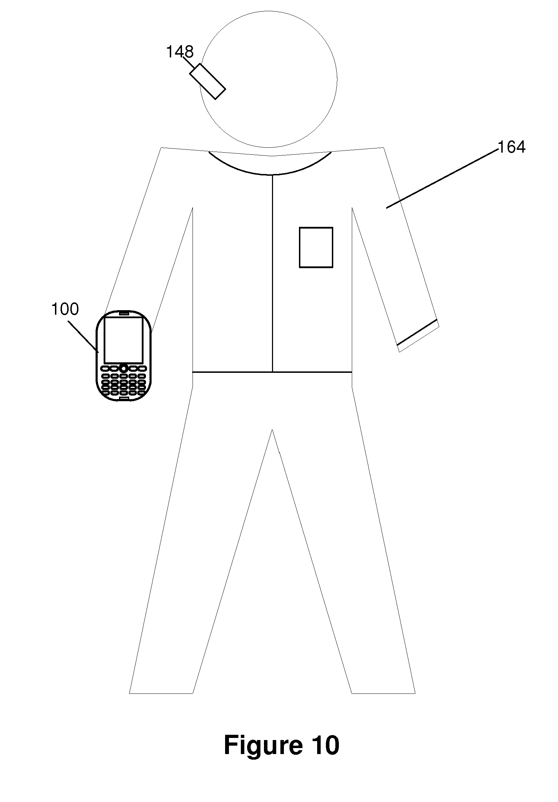

Figure 10 shows an example of a person 164 wearing the headset 148. The headset 148 communicates with the mobile communication device 100 through any suitable wireless communication signal or personal area network wireless signals.

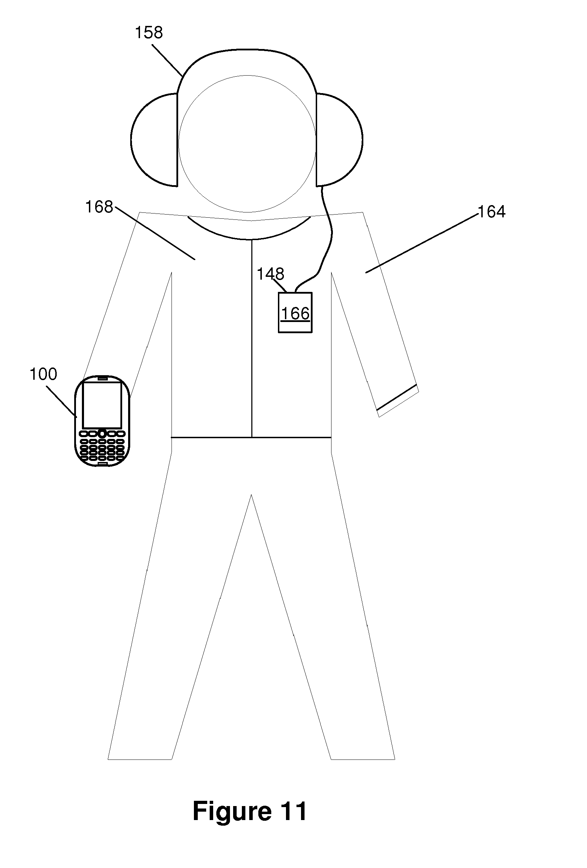

Figure 11 show an example of a person 164 wearing the headphones 158, which are connected to the headset 148 that is located in the pocket 166 of the person's shirt 168. The person 164 can carry the mobile communication device 100 and use the mobile communication device 100 while listening to music or to any other sounds communicated from the mobile communication device 100 to the headset 148 through any suitable wireless communication signal. The headphones 158 can be equipped with a microphone to allow the user to use the headphones 158 to conduct a telephone conversation.

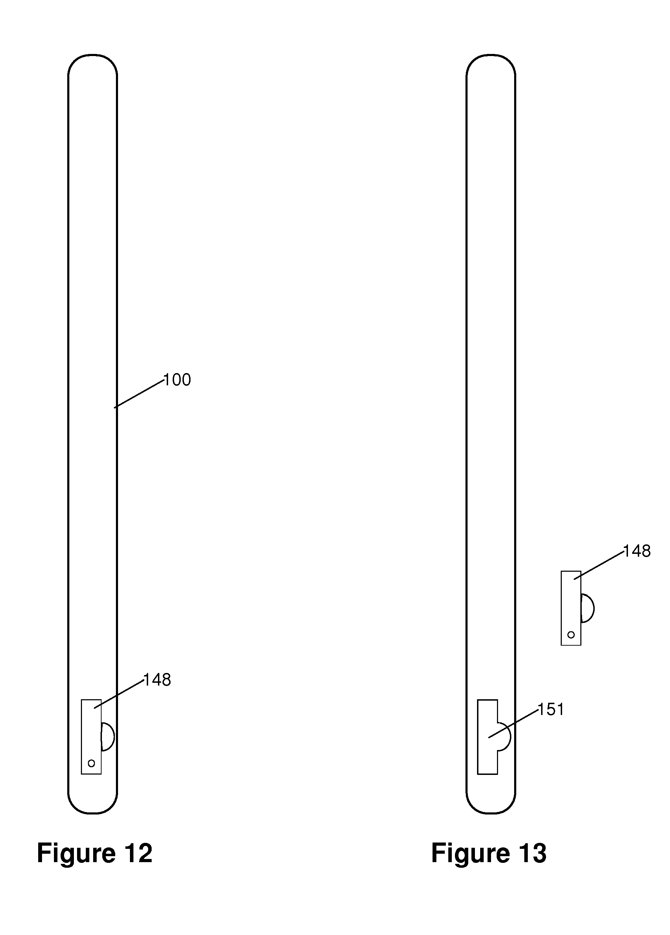

Figure 12 shows another embodiment of a mobile communication device 100 in accordance with the present disclosure. In contrast to the mobile communication device 100 of Figures 3 and 4, where the headset 148 can be inserted in a recess 150 defined by the housing 115, at the back of the mobile communication device 100, the mobile communication device 100 of Figure 12 has a recess defined at the side of the mobile communication device 100 and the headset 148 can be removably inserted in that recess. Figure 12 shows a side view of the mobile communication device 100 with the headset 148 inserted in a recess defined at the side of the mobile communication device 100. Figure 13 shows the mobile communication device of Figure 12 with the headset 148 removed from the mobile communication device 100. A recess 151 for receiving and holding the headset 148 is shown in Figure 13.

As will be understood by the skilled worker, even though the preceding have recesses located at the back of at the side of the mobile communication devices, the recess can be defined anywhere on the mobile communication device without departing from the scope of the present disclosure. Further, it is not necessary for the headset to be completely inserted in the recess. In some embodiments, the headset may be stored in the recess but still have a portion protruding from the recess. Furthermore, the headset can be of any suitable shape and geometry.

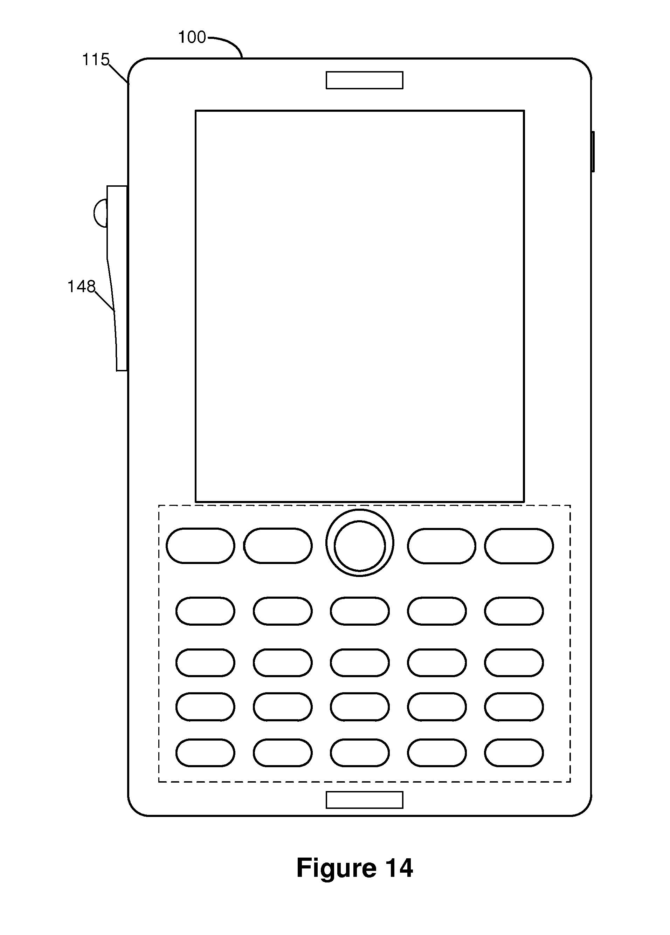

In further embodiments, the headset may simply attach to the housing of the mobile communication device. Figure 14 shows such an embodiment where the headset 148 is removably secured to the housing 115 of the mobile communication device 100. Any suitable mechanism for securing the headset to the housing is within the scope of the present disclosure. Examples of such mechanism include, amongst others, magnetic/metallic elements disposed on the headset 148 and the housing 115 to magnetically secure the headset 148 to the housing 115, or snap-fit element defined by, or located on, the headset 148 and the housing 115 to mechanically secure the headset to the housing.

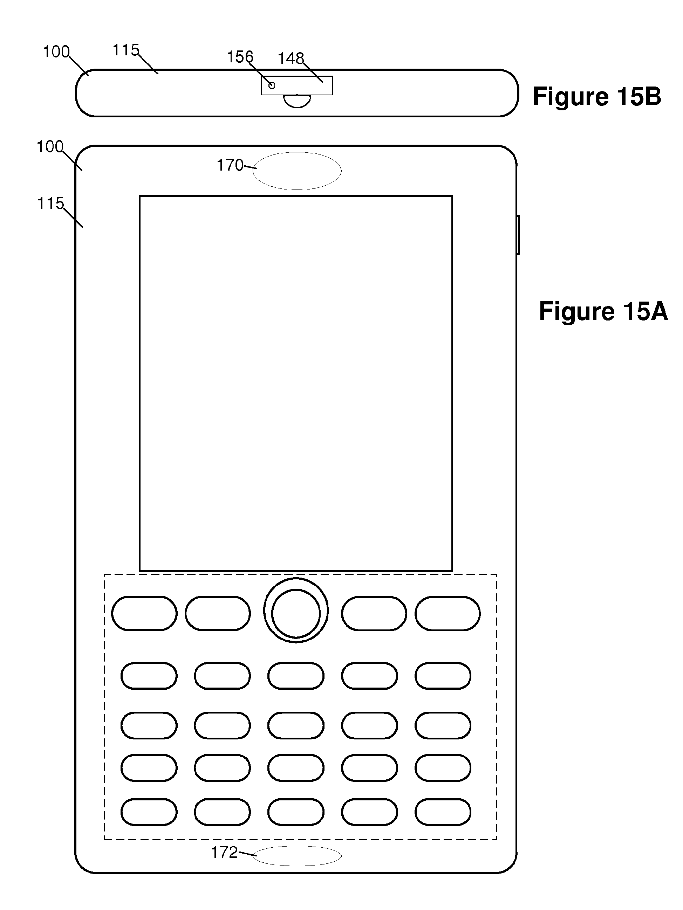

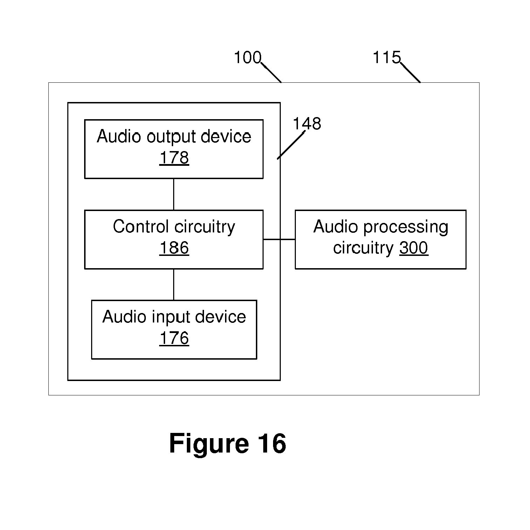

In other embodiments, the mobile communication device may use, as a microphone and as a speaker, the microphone and the speaker of the headset. Figures 15 and 16 show such an embodiment. Figure 15A is a front view of a mobile communication device 100 that does not in itself include a microphone or a speaker. Rather, the mobile communication device 100 of Figure 15B uses the microphone and the speaker of the headset that is removably secured in the housing 115 of the mobile communication device 100. The mobile communication device 100 has a sound exit aperture 170 that is acoustically connected (coupled) to the speaker of the headset when the headset is secured in the mobile communication device 100. The mobile communication device 100 also has a sound entry aperture 172 that is acoustically connected to the microphone of the headset when the headset is secured in the mobile communication device 100. The sound exit aperture 170 can be acoustically connected to the speaker of the headset through any suitable means such as, for example, an acoustic waveguide defined in the mobile communication device 100. Further, the sound entry aperture 170 can be acoustically connected to the microphone of the headset through any suitable means such as, for example, another acoustic waveguide defined in the mobile communication device 100. Such acoustic waveguides are known in the art.

Figure 15B shows a top view of the mobile communication device 100 of Figure 15, and shows the headset 148 inserted and secured in the housing 115 of the mobile communication device 100.

Figure 16 shows a block diagram representation of an embodiment of the present disclosure where the mobile communication device uses, as a microphone and as a speaker, the audio input device and the audio output device of the headset. In Figure 16, the headset 148 is removably secured to housing 115 of a mobile communication device. The headset 148 has an audio input device 178 and an audio input device 176 that are both operationally connected to control circuitry 186. The housing 115 of the mobile communication device 100 comprises audio processing circuitry 300, which can include, amongst others, the processor 102 (Figure 1) and the audio codec 121 (Figure 1). When the headset 148 is removably secured to the housing 115, the audio input device 176 and the audio output device 178 are operationally connected to the audio processing circuitry 300 through the control circuitry 186. In this embodiment, the audio input device 176 provides input audio signals to the audio processing circuitry 300 and the audio output device 178 receives output audio signals from the audio processing circuitry 300.

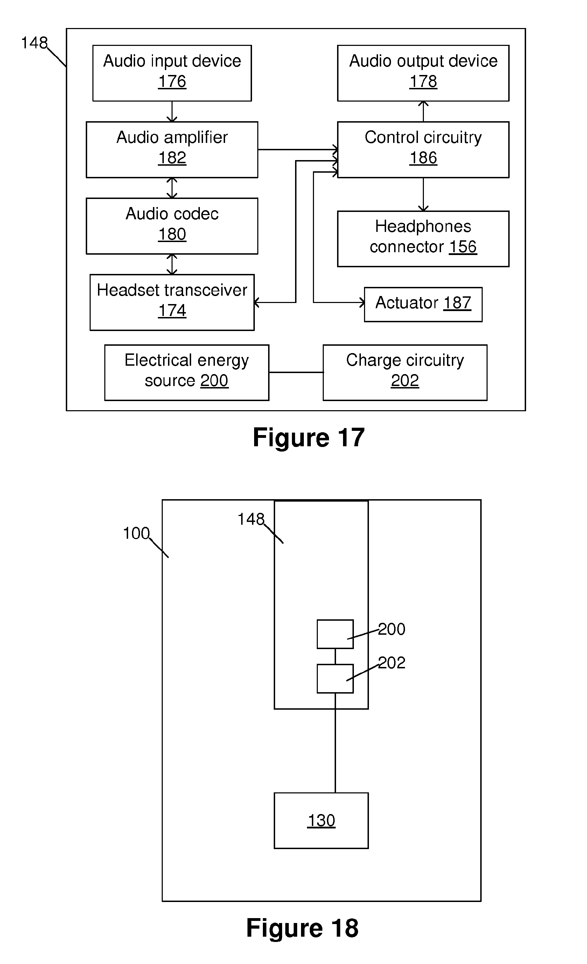

Figure 17 shows a block diagram representation of an embodiment of the headset 148 in accordance with the present disclosure. The headset has a headset transceiver 174 that can communicate with a transceiver of a mobile communication device. The headset transceiver 174 communicates with the transceiver of the mobile communication device using personal area network wireless signals. The headset transceiver 174 is operationally connected to an audio codec 180 that can convert a personal area network wireless signal, received at the transceiver 174, into an analog audio signal. The analog audio signal output by the audio codec 180 can be provided to an audio amplifier 182, which can control the level of the audio signal and can output an amplified audio signal. The amplified audio signal is provided to control circuitry 186, which can provide the amplified audio signal to an audio output device 178 of the headset 148, to a headphones connector 156, or to both the audio output device 178 and the headphones connector 156.

The control circuitry 186 can include sensor circuitry that detects when headphones are connected to the headphones connector 156. Upon detecting that the headphones are connected to the headphones connector 156, the control circuitry 186 can direct the amplified audio signal to the headphones connector 156 only. By default, the control circuitry 186 can provide the amplified audio to the audio output device 178 unless headphones are connected to the headphones connector 156. In certain scenarios, a user may wish to wear the headset 148 to conduct a telephone conversation and may also wish that a third party listen to the conversation. In such scenarios, the headphones can be connected to the headphones connector 156 and the control circuitry may be set to provide the amplified audio signal to the audio output device 178 and to the headphones connector 156. Setting the control circuitry 186 can be achieved by toggling the control circuitry 186 to pre-established settings; one of the pre-determined settings can be to provide the amplified audio signal to the audio output device 178 and to the headphones connector 156. As examples, the toggling can be effected by pushing an actuator 187 provided on the headset 148 or by transmitting a pre-determined toggle command from the mobile communication device to the headset transceiver 174.

The headset 148 also has an audio input device 176, which can be a microphone. The audio output device 178 can be a speaker. The audio input device 176 can provide an audio signal to the audio amplifier 182, which in turn can provide an amplified audio signal to the audio codec 180. The audio codec 180 can convert the amplified audio signal into a personal area network wireless signal that can be transmitted be the headset transmitter 174 to the transceiver of the mobile communication device.

The headset 148 has an electrical energy source 200 that powers the headset 148. The electrical energy source can be a battery or a rechargeable battery, or any other suitable type of electrical energy source. The headset 148 also has charge circuitry connected to the electrical energy source 200. The charge circuitry 200 can be operable to charge the electrical energy source 200 from the electrical energy source

(battery 130, Figure 1) of the mobile communication device 100 when the headset 148 is secured to the mobile communication device 100 and when the charge circuitry 202 is operationally connected to the electrical energy source of the mobile communication device 100. To do so, the charge circuitry 202 can have electrical contacts that electrically connect to the electrical energy source of the mobile communication device. Figure 18 shows an example of a block diagram representation of the headset 148 secured to mobile communication device 100, with the charge circuitry 202 of the headset 148 electrically connecting the battery 130 of the mobile communication device 100 to the electrical energy source 200 of the headset, to charge the electrical energy source 200 for the battery 130.

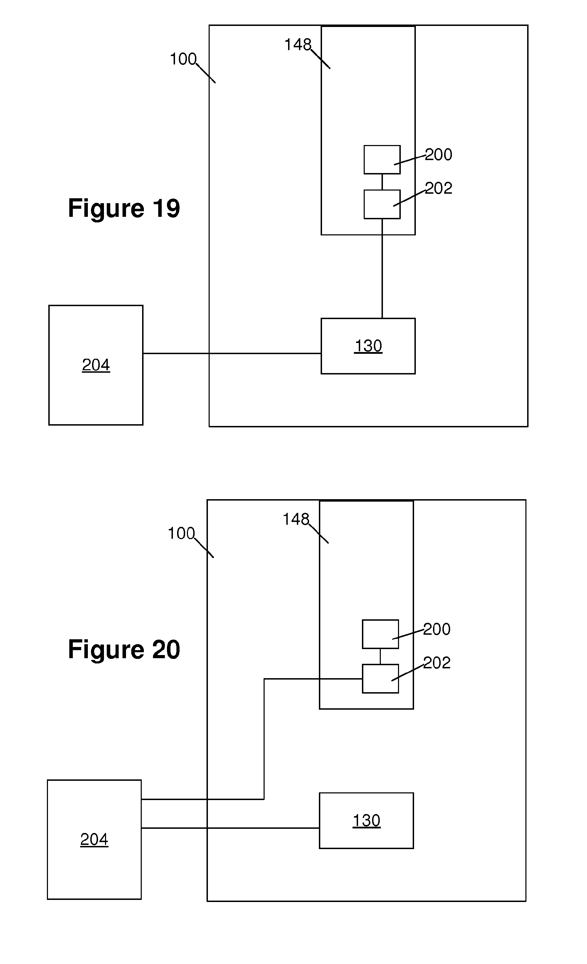

The charge circuitry 200 can also be operable to charge the electrical energy source 200 from an electrical charger when the mobile communication device is operationally connected to the electrical charger and when the headset is secured to the mobile communication device. In this scenario, the electrical contacts of the charge circuitry are electrically connected to the electrical charger either directly or indirectly through the electrical energy source of the mobile communication device. Figure 19 shows an example of a block diagram representation of the headset 148 secured to mobile communication device 100, with the charge circuitry 202 of the headset 148 electrically connecting the battery 130 of the mobile communication device 100 to the electrical energy source 200 of the headset, and with the battery 130 electrically connected to an electrical charger 204, to charge the electrical energy source 200 and the battery 130. Figure 20 shows another configuration where the charge circuitry 202 of the headset 148 is directly connected to the electrical charger 204.

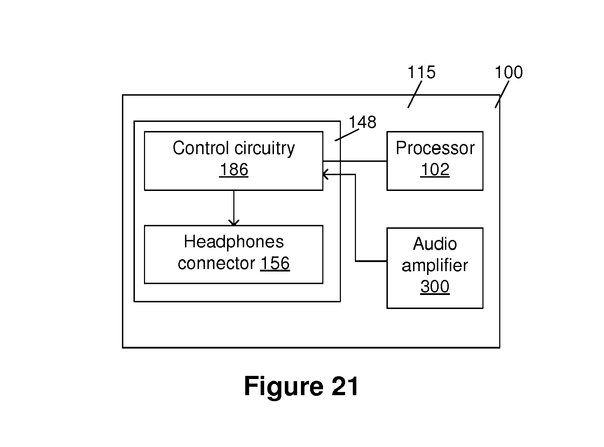

It is known in the art that mobile communications devices typically have a headphones connector that is fixedly secured to the housing of the communication device. In certain embodiments of the present disclosure, mobile communication devices will have two headphones connector: one fixedly secured to the housing and the other being part of headset. However, in other embodiments, it is possible to use the headphones connector 156 of the headset 148 whether the headset is secured to the housing of the mobile communication device or not. That is, it is possible to use the headphones connector of the headset whether the headset is secured to the housing of the mobile communication device or not. Figure 21 shows an embodiment of the present disclosure where the headset 148 is secured to the housing 115 of the mobile communication device 100. In this embodiment, the processor 102 of the mobile communication device 100 is operationally connected to the control circuitry 186 of the headset 148 and can set the control circuitry 186 to receive audio signals from an audio amplifier 300 of the mobile communication device 100 and to provide the audio signals to the headphones connector 156.

In the preceding description, for purposes of explanation, numerous details are set forth in order to provide a thorough understanding of the embodiments. However, it will be apparent to one skilled in the art that these specific details are not required. In other instances, well-known electrical structures and circuits are shown in block diagram form in order not to obscure the understanding. For example, specific details are not provided as to whether the embodiments described herein are implemented as a software routine, hardware circuit, firmware, or a combination thereof.

Embodiments of the disclosure can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A communication device (100) comprising:
a housing (115); and
a headset (148) removably securable to the housing (115), the housing (115) having a housing transceiver (122) and the headset having a headset transceiver (174), the housing transceiver (122) and the headset transceiver (174) being configured to communicate with each other using personal area network wireless signals, the headset (148) having control circuitry (186), an audio output device (178), an audio codec (180), and a headphones connector (156) for connecting headphones to the headset (148), the audio codec (180) to convert a personal area network wireless signal received from the housing (115) into an analog audio signal, the control circuitry (186) being operable, in a first configuration, to provide the analog audio signal to the audio output device (178) and, in a second configuration, to provide the analog audio signal to the headphones connector (156) for communicating the analog audio signal to the headphones when the headphones are connected to the headphones connector (156).

2. The communication device of claim 1 wherein the control circuitry is operable, in a third configuration, to provide the analog audio signal to the audio output device and to the headphones connector when the headphones are connected to the headphones connector.

3. The communication device of claim 1 or 2 wherein the communication device further comprises an audio amplifier that can output another analog audio signal, the control circuitry being operable to provide the other analog audio signal to the headphones connector when the headset is removably secured to the housing and when the headphones are connected to the headphones connector.

4. The communication device of any preceding claim wherein:
the housing defines a recess; and
the headset can be stored in the recess.

5. The communication device of claim 4 wherein the headset and the housing have cooperating parts that define a push to release mechanism to releasably secure the headset to the housing.

6. The communication device of any preceding claim wherein the personal area network signals include packetized data.

7. The communication device of claim 6 wherein the audio codec converts the packetized data into the analog audio signal.

8. The communication device of claim 6 wherein the personal area network signals are Bluetooth^{™} signals.

9. The communication device of any preceding claim wherein the housing includes a housing electrical energy source and the headset includes a headset electrical energy source, the headset comprising charge circuitry to electrically connect the headset electrical energy source to the housing electrical energy source to charge the headset electrical energy source from the housing electrical energy source when the headset is removably secured to the housing.

10. The communication device of any one of claims 1 to 8 wherein the housing includes a housing electrical energy source and the headset includes a headset electrical energy source, the housing and the headset comprising circuitry configurable to charge the housing electrical energy source and the headset electrical energy source from an electrical charger when the communication device is connected to the electrical charger and when the headset is releasably secured to the housing, the housing electrical energy source preferably being a first battery and the headset electrical energy source preferably being a second battery, the communication device preferably being a smartphone.

11. The communication device of any preceding claim wherein:
the housing comprises audio processing circuitry; and
the headset further has an audio input device, the audio input device and the audio output device of the headset being operationally connected to the audio processing circuitry when the headset is removably secured to the housing, the audio input device to provide input audio signals to the audio processing circuitry and the audio output device to receive output audio signals from the audio processing circuitry when the headset is removably secured to the housing.

12. A headset (148) for a communication device, the headset (148) comprising:
a headset transceiver (174) configured to communicate with another transceiver using personal area network wireless signals;
an audio output device (178);
an audio codec (180); and
a headphones connector (156) for connecting headphones to the headset (148), the audio codec (180) to convert a personal area network wireless signal received from the other transceiver into an analog audio signal, the headset (148) being operable, in a first configuration, to provide the analog audio signal to the audio output device (178) and, in a second configuration, to provide the analog audio signal to the headphones connector (156) for communicating the analog audio signal to the headphones when the headphones are connected to the headphones connector (156).

13. The headset of claim 12 wherein the headset is operable, in a third configuration, to provide the analog audio signal to the audio output device and to the headphones connector when the headphones are connected to the headphones connector.

14. The headset of claim 12 or 13 wherein headset can be removably secured to a mobile communication device, the mobile communication device comprising an audio amplifier that can output another analog audio signal, the headset being operable to provide the other analog audio signal to the headphones connector when the headset is removably secured to the mobile communication device and when the headphones are connected to the headphones connector.

15. The headset of any one of claims 12 to 14 wherein the personal area network signals include packetized data, the audio codec preferably for converting the packetized data into the analog audio signal, the personal area network signals preferably being Bluetooth^{™} signals.
